# EUROPEAN PATENT SPECIFICATION

(11) **EP 1 594 681 B1**
(45) Date of publication and mention of the grant of the patent: **13.09.2006**
(21) Application number: 04701868.4
(22) Date of filing: 14.01.2004
(51) Int. Cl.: B29C 70/88, H05F 3/02

(54) **CONDUCTIVE TILE OF PLASTIC, ANTISTATIC FLOOR AND METHOD FOR MANUFACTURE THEREOF**
LEITFÄHIGER KUNSTSTOFFZIEGEL, ANTISTATISCHER BODEN UND HERSTELLUNGSVERFAHREN DAFÜR
DALLE CONDUCTRICE PLASTIQUE, PLANCHER ANTISTATIQUE ET PROCEDE DE FABRICATION CORRESPONDANT

(30) Priority: 17.01.2003 BE 200300041
(43) Date of publication of application: 16.11.2005
(73) Proprietor: Ecoloc NV, 2960 Brecht (BE)
(72) Inventor: STOOP, Patrick, Alfons, Maria, Leo, B-2960 Brecht (BE)
(74) Representative: Hoorweg, Petrus Nicolaas
(86) International application number: PCT/BE2004/000007
(87) International publication number: WO 2004/065109

(56) References cited:
- EP-A- 0 278 546
- EP-A- 0 440 970
- DE-A- 4 406 693
- US-A- 5 397 608

## Description

The invention relates to a tile of plastic with conductive properties, wherein a substantially homogeneously distributed network of microscopic metal fibres is arranged in the plastic mass of the tile; an antistatic floor constructed from connected individual tiles; and a method for manufacturing such tiles.

Such a tile is known for instance from DE 4406693 which discloses the features of the preamble of claim 1. The invention described in this document relates to tiles for work areas in which electrical or optical instruments are present. The composition used to manufacture such tiles comprises a polyolefin from the group HDPE, polypropylene and/or polybutylene, a non-conductive filler material and a conductive filler material such as stainless steel fibres. These tiles are manufactured by:
- extruding all elements of the composition to form granules, without the metal fibres;
- mixing the granules with the metal fibres;
- extruding this mixture in a foil extruding machine to obtain a flexible plastic plate;
- cutting this foil to form tiles. The drawback of such tiles is that they have to be glued onto the ground with a conductive glue so as to form an anti-static floor, and cannot therefore be displaced to another space.

Another known technique for manufacturing an object with conductive properties from plastic consists of adding solvent-based additives to the plastic composition of the tile. These additives are in fact unsuitable for adding to such a plastic composition because they have the property of migrating, whereby their effect, and thereby also the conductive properties, are lost over time. Another known technique adds carbon to the plastic composition of the floor tile. This has the drawback however that the objects give off a black colour.

The invention aims to obviate the above stated drawbacks and has the object of providing a tile of the type stated in the preamble and a method for manufacture thereof, with which an anti-static floor can be placed without glueing and can be removed again for use in another space.

The invention proposes for this purpose a tile which is distinguished in that the tile is formed on its peripheral edge with protruding connecting elements for mutual form-fitting connection of the tiles, wherein the network extends at least as far as the peripheral edge of the tile.

This substantially homogeneous network of metal fibres forms an electrically conductive network providing a good conductivity of the tile which is retained because these metal fibres cannot migrate from the tile. These microscopic metal fibres extend up to the edges of the tile such that they make contact with the metal fibres of an adjacent tile when two tiles are connected form-fittingly to each other by means of the protruding connecting elements fitting into each other. In this manner a modular floor is formed in which there extends a continuous fibre network, and the surface resistance of a number of mutually connected tiles will remain sufficiently low without adhesion with a conductive glue being necessary.

Since such tiles are expensive products, it is desirable that they can be reused in an easy manner when for instance a change of location occurs. This is entirely possible with the tiles according to the invention, while it is not possible with glued tiles.

The tile according to the invention further has good mechanical properties and an increased resistance to wear.

According to a preferred embodiment, the protruding connecting elements are dovetail connecting elements.

According to the preferred embodiment, the tile according to the invention has a surface resistance of less than 10⁹ Ω. The surface resistance measured on a single tile will for instance be 10⁵ Ω, while the surface resistance measured between two random tiles of a floor constructed from such tiles will for instance be 10⁹ Ω, which is sufficiently low to be able to speak of an anti-static floor.

In addition, the tile according to the invention preferably has a contact resistance of between 10⁴ and 10⁶ Ω.

The values for the surface and contact resistance are used to classify a floor as being anti-static (surface resistance <= 10⁹ Ω) and/or conductive (contact resistance <= 10⁵ Ω). The required values for the surface and contact resistance will of course depend on the desired application, and more or fewer metal fibres can be arranged in the tile subject to the desired value.

According to a preferred embodiment of the tile according to the invention, the metal fibres have a diameter smaller than 100 µm. The metal fibres typically have a diameter in the order of magnitude of 10 µm and a length in the order of magnitude of millimetres. The skilled person will however appreciate that these values are purely indicative and can be modified without departing from the scope of protection of the invention.

According to a possible variant of the invention, the plastic composition contains PVC. This is a material which is often used for, among other things, tiles for work areas and the like.

The metal fibres which can be used are for instance stainless steel fibres.

The invention further relates to an anti-static floor constructed from tiles according to any of the above described embodiment variants.

The invention further relates to a method for manufacturing a tile according to the invention, wherein a suitable thermoplastic plastic composition is selected for the tile, metal fibres are added to the thermoplastic plastic composition, the metal fibres are distributed substantially homogeneously through the plastic composition and this composition containing metal fibres is then subjected to a heat treatment in order to form the tile.

Owing to the fact that the metal fibres are distributed substantially homogeneously through the plastic composition and that metal fibres in plastic do not tend to migrate, an object is obtained which retains its conductive properties. Furthermore, the fine metal fibres do not have an adverse effect on the properties of the object. On the contrary, an additional mechanical strength is imparted to the object by adding metal fibres.

According to a first embodiment of the method according to the invention, the metal fibres are added to the constituents of the plastic composition, whereafter this whole is extruded to form a half-product, this half-product is melted by supplying heat to obtain a melted mass, and this melted mass is finally subjected to the heat treatment so as to form the tile.

The normal plastic mixture for the tile consists for instance of the following constituents: PVC powder, mineral filler, softening agents, stabilizers, lubricants, dyes and so on. Metal fibres are added to this mixture. This mixture is then extruded to form a half-product, for instance in the form of granules. The metal fibres in the extruder are in this way distributed in a homogeneous manner in the plastic mixture.

According to a further developed embodiment variant of the method of the invention, use is made of a known method for bundling the metal fibres in a plastic sheath, wherein the composition of the plastic sheath is modified so as to be compatible with the plastic composition of the tile.

According to this known method, metal fibres consisting for instance of microscopically small inox wires are encased with a sheath so that these fibre bundles form rods which are easy to handle. These rods are for instance marketed by the company Bekaert under the name "Bekishield". The material from which this sheath is manufactured must be compatible with the thermoplastic plastic composition that is used and, when PVC is used, must for instance also have a lower melting point than PVC.

According to a preferred embodiment of the method according to the invention, the heat treatment for forming the tile is performed by injection moulding of the melted mass in a mould.

During the injection moulding process the half-product is for instance melted and injected into a mould in which it takes on the desired form during a further cooling cycle. In this way the metal fibres in the end product are distributed homogeneously over the volume of the tile. The injection moulding process has the further advantage that the microscopically small metal fibres can penetrate into the joins of the mould, whereby these fibres protrude a little from the edge of the tiles and provide a good continuation of the fibre network in a floor constructed from a number of tiles according to the invention.

It may be desirable in particular spaces to have a floor covering system with good conductive properties, a so-called "anti-static" floor, for discharging the static electricity. Such floors are for instance desirable in electronic and medicals labs, in spaces where there is explosion hazard, and so on. With the method of the invention tiles can thus be made from plastic with which such an anti-static floor can be laid.

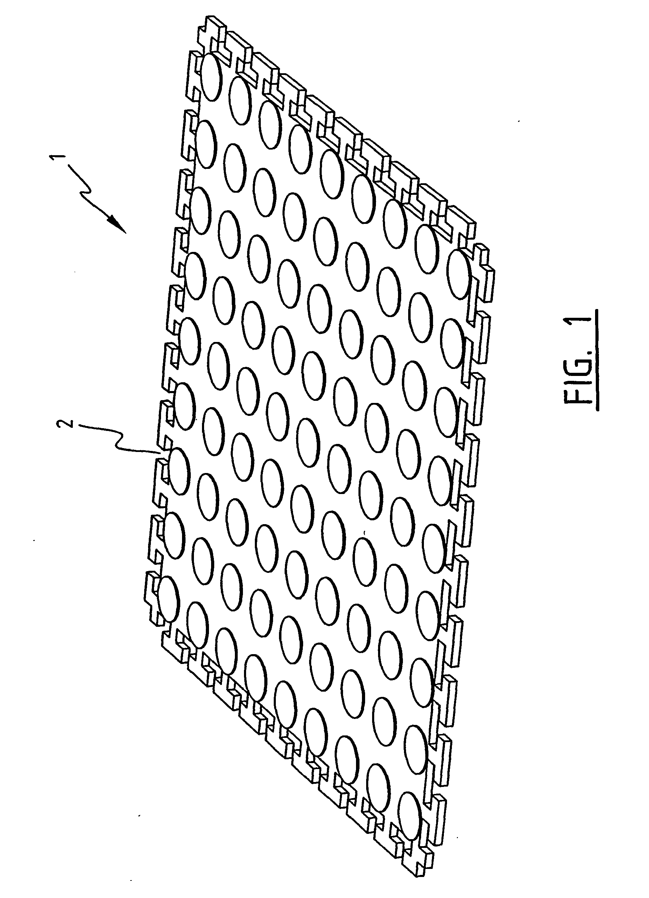

An example of a tile according to the invention will now be further elucidated with reference to the figure description hereinbelow and the single annexed figure, which shows a perspective view of a floor tile according to the invention.

Floor tile 1 is provided on its edges with dovetail connections 2 whereby tiles 1 can be connected to each other without glueing to form an anti-static floor. Tiles 1 are manufactured from a thermoplastic plastic composition which can be the same as that for known classic floor tiles, to which microscopic metal fibres are added.

This exemplary embodiment does not of course limit the scope of protection of the invention which, on the contrary, is defined by the appended claims.

## Claims

1. Tile of plastic with conductive properties, wherein a substantially homogeneously distributed network of microscopic metal fibres is arranged in the plastic mass of the tile, **characterized in that** the tile is formed on its peripheral edge with protruding connecting elements for mutual form-fitting connection of the tiles, wherein the network extends at least as far as the peripheral edge of the tile.

2. Tile as claimed in claim 1, wherein the protruding connecting elements are dovetail connecting elements.

3. Tile as claimed in either of the foregoing claims, wherein the tile has a surface resistance of less than 10⁹ Ω.

4. Tile as claimed in any of the foregoing claims, wherein the tile has a contact resistance of between 10⁴ and 10⁶ Ω.

5. Tile as claimed in any of the foregoing claims, wherein the plastic contains PVC.

6. Tile as claimed in any of the foregoing claims, wherein the metal fibres have a diameter smaller than 100 µm.

7. Tile as claimed in claim 6, wherein the metal fibres have a diameter in the order of magnitude of 10 µm and a length in the order of magnitude of millimetres.

8. Tile as claimed in any of the foregoing claims, wherein the metal fibres are stainless steel fibres.

9. Anti-static floor constructed from connected individual tiles as claimed in any of the foregoing claims.

10. Method for manufacturing a tile as claimed in any of the claims 1-8, wherein a suitable thermoplastic plastic composition is selected for the tile, wherein metal fibres are added to the thermoplastic plastic composition, that the metal fibres are distributed substantially homogeneously through the thermoplastic plastic composition, and that this composition containing metal fibres is then subjected to a heat treatment in order to form the tile.

11. Method as claimed in claim 10, wherein the metal fibres are added to the constituents of the thermoplastic plastic composition, whereafter this whole is extruded to form a half-product, this half-product is melted by supplying heat to obtain a melted mass, and this melted mass is finally subjected to the heat treatment to form the tile.

12. Method as claimed in either of the claims 10-11, wherein use is made of a known method for bundling the metal fibres in a plastic sheath, wherein the composition of the plastic sheath is modified so as to be compatible with the thermoplastic plastic composition of the tile.

13. Method as claimed in claim 12, wherein the heat treatment for forming the tile is performed by injection moulding of the melted mass in a mould.

## Patentansprüche

1. Kunststoff-Kachel mit Leitfähigkeitseigenschaften, bei der ein im wesentlichen homogen verteiltes Geflecht aus mikroskopischen Metallfasern in der Kunststoffmasse der Kachel angeordnet ist, **dadurch gekennzeichnet, daß** die Kachel an ihrem Außenrand mit hervorstehenden Verbindungselementen zur gegenseitigen formschlüssigen Verbindung der Kacheln versehen ist, wobei sich das Geflecht wenigstens bis zum Außenrand der Kachel erstreckt.

2. Kachel nach Anspruch 1, bei der die hervorstehenden Verbindungselemente Schwalbenschwanz-Verbindungselemente sind.

3. Kachel nach einem der vorstehenden Ansprüche, die einen Oberflächenwiderstand von weniger als 10⁹ Ω aufweist.

4. Kachel nach einem der vorstehenden Ansprüche, die einen Kontaktwiderstand zwischen 10⁴ und 10⁶ Ω aufweist.

5. Kachel nach einem der vorstehenden Ansprüche, bei der der Kunststoff PVC enthält.

6. Kachel nach einem der vorstehenden Ansprüche, bei der die Metallfasern einen Durchmesser von weniger als 100 µm aufweisen.

7. Kachel nach Anspruch 6, bei der die Metallfasern einen Durchmesser in der Größenordnung von 10 µm und eine Länge in der Größenordnung von Millimetern aufweisen.

8. Kachel nach einem der vorstehenden Ansprüche, bei der die Metallfasern Fasern aus rostfreiem Stahl sind.

9. Antistatischer Boden, hergestellt aus einzelnen miteinander verbundenen Kacheln nach einem der vorstehenden Ansprüche.

10. Verfahren zur Herstellung einer Kachel nach einem der Ansprüche 1-8, bei dem eine geeignete thermoplastische Kunststoffverbindung für die Kachel ausgewählt wird, Metallfasern zu der thermoplastischen Kunststoffverbindung hinzugefügt werden, die Metallfasern im wesentlichen homogen in der thermoplastischen Kunststoffverbindung verteilt werden, und diese Metallfasern enthaltende Verbindung dann einer Hitzebehandlung unterzogen wird, um die Kachel zu bilden.

11. Verfahren nach Anspruch 10, bei dem die Metallfasern zu den Bestandteilen der thermoplastischen Kunststoffverbindung hinzugefügt werden, wonach das Ganze extrudiert wird, um ein Halbprodukt zu bilden, dieses Halbprodukt durch Zulieferung von Hitze geschmolzen wird, um eine geschmolzene Masse zu erhalten, und diese geschmolzene Masse schließlich einer Hitzebehandlung unterzogen wird, um die Kachel auszubilden.

12. Verfahren nach einem der Ansprüche 10-11, bei dem ein bekanntes Verfahren zum Bündeln von Metallfasern in einer Kunststoffhülle verwendet wird, bei dem die Zusammensetzung der Kunststoffhülle so modifiziert wird, daß sie mit der thermoplastischen Kunststoffverbindung der Kachel kompatibel ist.

13. Verfahren nach Anspruch 12, bei dem die Hitzebehandlung zur Ausbildung der Kachel durch Spritzgießen der geschmolzenen Masse in eine Form ausgeführt wird.

## Revendications

1. Dalle de plastique ayant des propriétés conductrices, dans laquelle un réseau de fibres métalliques microscopiques réparties de façon substantiellement homogène est disposé dans la masse plastique de la dalle, **caractérisée en ce que** la dalle est formée sur sa périphérie d'éléments de connexion en saillie permettant une connexion réciproque des dalles par adéquation de formes, dans laquelle le réseau se prolonge au moins aussi loin que la périphérie de la dalle.

2. Dalle selon la revendication 1, dans laquelle les éléments de connexion en saillie sont des éléments de connexion en queue d'aronde.

3. Dalle selon l'une quelconque des revendications précédentes, dans laquelle la dalle a une résistance de surface inférieure à 10⁹ Ω.

4. Dalle selon l'une quelconque des revendications précédentes, dans laquelle la dalle a une résistance de contact comprise entre 10⁴ et 10⁶ Ω.

5. Dalle selon l'une quelconque des revendications précédentes, dans laquelle le plastique contient du PVC.

6. Dalle selon l'une quelconque des revendications précédentes, dans laquelle les fibres métalliques ont un diamètre inférieur à 100 µm.

7. Dalle selon la revendication 6, dans laquelle les fibres métalliques ont un diamètre d'un ordre de grandeur de 10 µm et une longueur de l'ordre de grandeur de millimètres.

8. Dalle selon l'une quelconque des revendications précédentes, dans laquelle les fibres métalliques sont des fibres en acier inoxydable.

9. Plancher antistatique construit à partir de dalles individuelles connectées selon l'une quelconque des revendications précédentes.

10. Procédé de fabrication d'une dalle selon l'une quelconque des revendications 1 à 8, dans lequel une composition de plastique thermoplastique appropriée est choisie pour la dalle, dans lequel des fibres métalliques sont ajoutées à la composition de plastique thermoplastique, **caractérisé en ce que** les fibres métalliques sont réparties de façon substantiellement homogène dans la composition de plastique thermoplastique, et **en ce que** cette composition contenant des fibres métalliques est alors soumise à un traitement thermique afin de former la dalle.

11. Procédé selon la revendication 10, dans lequel les fibres métalliques sont ajoutées aux éléments constitutifs de la composition de plastique thermoplastique, après quoi cet ensemble est extrudé pour former un demi-produit, ce demi-produit est fondu par apport de chaleur pour obtenir une masse fondue, et cette masse fondue est finalement soumise au traitement thermique pour former la dalle.

12. Procédé selon l'une quelconque des revendications 10 et 11, dans lequel un procédé connu de mise en faisceaux des fibres métalliques dans une gaine plastique est utilisé, dans lequel la composition de la gaine plastique est modifiée pour qu'elle soit compatible avec la composition de plastique thermoplastique de la dalle.

13. Procédé selon la revendication 12, dans lequel le traitement thermique permettant de former la dalle est effectué par moulage par injection de la masse fondue dans un moule.
